Europäisches Patentamt

European Patent Office

Office européen des brevets

(11) Veröffentlichungsnummer: **0 282 788 B1**

(19)

(12) **EUROPÄISCHE PATENTSCHRIFT**

(45) Veröffentlichungstag der Patentschrift: **29.04.92**

(21) Anmeldenummer: **88102835.1**

(22) Anmeldetag: **25.02.88**

(51) Int. Cl.⁵: **H04M 3/24**, G06F 11/16

(54) **Verfahren zur Überwachung einer fehlerfreien Abwicklung von Ansteuer- und Ausschaltevorgängen in einer Schaltungsanordnung für Fernmeldeanlagen, insbesondere Fernsprechvermittlungsanlagen.**

(30) Priorität: **18.03.87 DE 3708833**

(43) Veröffentlichungstag der Anmeldung:
**21.09.88 Patentblatt 88/38**

(45) Bekanntmachung des Hinweises auf die
Patenterteilung:
**29.04.92 Patentblatt 92/18**

(84) Benannte Vertragsstaaten:
**AT BE CH DE ES FR GB GR IT LI LU NL SE**

(56) Entgegenhaltungen:
**DE-A- 2 527 888**
**FR-A- 2 271 613**
**US-A- 4 165 533**

(73) Patentinhaber: **SIEMENS AKTIENGESELL-
SCHAFT
Wittelsbacherplatz 2
W-8000 München 2(DE)**

(72) Erfinder: **Prey, Gerhard, Ing. grad.
Kiefernstrasse 24
W-8031 Eichenau(DE)**

## Beschreibung

Die Erfindung betrifft ein Verfahren zur Überwachung einer fehlerfreien Abwicklung von Ansteuer- und Anschaltevorgängen in einer Schaltungsanordnung für Fernmeldeanlagen, insbesondere Fernsprechvermittlungsanlagen, in der individuelle Geräte von einer zentralen Schalteinrichtung mit Hilfe von von letzterer zu den Geräten übertragbaren gerätindividuellen Anschaltbefehlen angesteuert werden, und in der nach jeweiliger Ansteuerung und Anschaltung des betreffenden Gerätes an die Schalteinrichtung zwischen diesen beiden Informationen zur Überprüfung der richtigen Anschaltebefehls-Abgabe an das Gerät sowie der darauf erfolgten Anschaltung des richtigen Gerätes ausgetauscht werden, und in der von der Schalteinrichtung an ein angeschaltetes Gerät übertragene verschiedene Befehle befehls-individuell durch zurückübertragene Quittungszeichen überprüft werden, und in der von der Schalteinrichtung an das betreffende Gerät nach erfolgter Anschaltung ein Startbefehl übertragen und vor oder zur Wiederabschaltung ein Stopbefehl übertragen wird.

Die Zeitschrift "telcom report", 5 (1982) Nr. 4 (englischsprachige Ausgabe) Seite 262ff beschreibt eine Schaltungsanordnung für Fernmeldeanlagen, insbesondere Fernsprechvermittlungsanlagen, in denen individuelle Geräte von einem zentralen Schaltwerk angesteuert werden, indem dieses mittels einer an eine Ansteuereinrichtung jeweils abgegebenen Adresse die Ansteuereinrichtung veranlaßt, jeweils einem individuellen Gerät über einen von ihr zu letzterem verlaufenden Ansteuerstromkreis eine Ansteuerinformation zu übertragen, wobei die verschiedenen Geräte über verschiedene oder teilweise verschiedene Ansteuerstromkreise ansteuerbar sind, und in denen mittels der Ansteuerinformation Anschaltemittel im jeweiligen individuellen Gerät veranlaßt werden, letzteres mit einer zum zentralen Schaltwerk führenden gemeinsamen Busleitung zu verbinden. Die hierin genannte Ansteuereinrichtung besteht in diesem bekannten Falle aus einem Modulprozessor (SLMCP), der jeweils für eine Mehrfachteilnehmeranschlußschaltung (SLM) vorgesehen ist. Eine im unteren Bild auf Seite 263 dieser Zeitschrift dargestellte derartige Ansteuereinrichtung empfängt zur Ansteuerung jeweils eines einzigen individuellen Gerätes (Einzel-Teilnehmeranschlußschaltung SUC/COSLAC) eine Adresse von einem zentralen Schaltwerk (Konzentratorprozessor DICC), wodurch diese Ansteuereinrichtung veranlaßt ist, über einen von ihr zu dem individuellen Gerät verlaufenden Ansteuerstromkreis eine Ansteuerinformation zu übertragen. Die verschiedenen individuellen Geräte sind über verschiedene oder teilweise verschiedene Ansteuerstromkreise ansteuerbar. Es kann daher jeweils ein eigener Ansteuerstromkreis unabhängig von allen übrigen Ansteuerstromkreisen jeweils von der Ansteuereinrichtung zu jedem der individuellen Geräte verlaufen. Die Ansteuerstromkreise können aber auch teilweise gemeinsam für die verschiedenen individuellen Geräte vorgesehen sein. In diesem Falle haben also die verschiedenen individuellen Geräte nur teilweise verschiedene Ansteuerstromkreise. Eine derartige Anordnung zeigt z. B. die deutsche Patentschrift DE-C-1 562 230. Hierin ist eine koordinatenmäßige Ansteuerung individueller Geräte durch eine Ansteuereinrichtung bekannt. In diesem Falle sind die Anschaltemittel elektromagnetische Relais mit Anschaltekontakten. Die Anschaltemittel können aber ebensogut auch durch rein elektronisch arbeitende Schaltmittel realisiert sein. - Wie weiterhin aus der erwähnten Darstellung auf Seite 263 unten hervorgeht, dienen die Anschaltemittel dazu, ein individuelles Gerät aufgrund seiner Ansteuerung mit einer zum zentralen Schaltwerk führenden gemeinsamen Busleitung zu verbinden.

Die Ansteuerung individueller Geräte kann also über gerätindividuelle einzelne Ansteuerstromkreise erfolgen oder über teilweise gemeinsame Ansteuerstromkreise, wie in der obengenannten deutschen Patentschrift DE-C-1 562 230 beschrieben (Ansteuerung in zwei Koordinaten) oder auch in codierter Form, wobei verschiedene Codes verwendbar sind, z. B. der Dezimalcode, der Binärcode oder andere Codes.

Die Zweckmäßigkeit einer mittels Adressen codiert ansteuerbaren Ansteuereinrichtung, die je für eine kleinere Anzahl von individuellen Geräten vorgesehen ist und jedes derselben über gänzlich oder teilweise gerätindividuelle Ansteuerstromkreise ansteuert, besteht darin, daß die Anzahl der von einem zentralen Schaltwerk ausgehenden Stromkreise relativ klein gehalten werden kann.

Bei der Ansteuerung individueller Geräte besteht jedoch auch das Problem der Überwachbarkeit einer fehlerfreien Abwicklung der erwähnten Ansteuer- und Anschaltevorgänge. Gemäß der bereits genannten deutschen Patentschrift sind Überwachungsmöglichkeiten unter der Voraussetzung gegeben, daß die Ansteuerstromkreise unmittelbar von dem zentralen Schaltwerk ausgehen, welches die Ansteuer- und Anschaltevorgänge abwickelt. Eine weitere Überwachungsmöglichkeit besteht darin, daß unter der Voraussetzung, daß die von einem zentralen Schaltwerk abgegebenen kodierten Ansteueradressen bis zu den anzusteuernden individuellen Geräten gelangen, die Richtigkeit der Adressenübermittlung durch eine Rücksendung einer jeweils empfangenen Adresse oder durch Rücksendung ihres Komplementes oder durch Ansteuerung mittels Adresse und deren Komplement laufend zu überwachen.

So ist aus dem französischen Patentdokument mit der Veröffentlichungsnummer FR-A-2 271 613 für Fernsprechvermittlungsanlagen mit über ein Busleitungssystem an eine Steuerzentrale angeschlossenen peripheren Einrichtungen ein Verfahren zur Erkennung der ordnungsgemäßen Adressendecodierung in den peripheren Einrichtungen bekannt, bei dem eine jeweilige periphere Einrichtung nach Aufforderung und Adressierung durch die Steuerzentrale ihre Adresse und ihre invertierte Adresse an die Steuerzentrale zurückmeldet, wo sie mit der gesendeten Adresse verglichen wird. Ergibt der Vergleich eine Abweichung der gesendeten zu der zurückgemeldeten Adresse, so wird durch stellenweisen Vergleich der genannten Adressen die Adresse der Adressendecodierung ermittelt, die den betreffenden Adressierungsfehler verursacht. Nähere Berührungspunkte mit dem Gegenstand der vorliegenden Erfindung sind aus diesem Dokument nicht ersichtlich.

In der deutschen Offenlegungsschrift DE-A-35 12 846 ist eine andere Überwachungsmöglichkeit hinsichtlich der Richtigkeit der Abwicklung der Ansteuer- und Anschaltevorgänge bekannt geworden. Hierin wird bei Ansteuerung jeweils eines individuellen Gerätes im Zusammenhang von Informationsübertragungsvorgängen von einer zentralen Schalteinrichtung zu dem jeweils individuellen Gerät eine gerätindividuelle Kennung über die betreffende Busleitung an dieses individuelle Gerät übertragen, die hier gespeichert wird. Bei jedesmaliger Ansteuerung eines individuellen Gerätes seitens der zentralen Schalteinrichtung wird die dabei übertragene Kennung mit der in dem individuellen Gerät bereits gespeicherten Kennung verglichen. Dieser Vergleich kann in dem individuellen Gerät stattfinden. Ebenso besteht auch die Möglichkeit, die in dem individuellen Gerät jeweils gespeicherte Kennung zu der zentralen Schalteinrichtung zu übertragen und hier mit der zuvor abgegebenen Kennung zu vergleichen. In beiden Fällen ist es in dieser bekannten Anordnung also erforderlich, in jedem der von der zentralen Schalteinrichtung ansteuerbaren individuellen Geräte eine Kennung zu speichern, und zwar von jeweils einem Ansteuerungsvorgang zu einem nächsten Ansteuerungsvorgang. Die individuellen Geräte müssen also in der Lage sein, solche Kennungen zu speichern.

Für die Erfindung besteht die Aufgabe, bei einer Schaltungsanordnung der eingangs angegebenen Art eine Überwachungsmöglichkeit zu schaffen, die in den ansteuerbaren individuellen Geräten eine Speichermöglichkeit für gerätindividuelle Kennungen nicht erforderlich macht.

Die Erfindung löst die gestellte Aufgabe dadurch, daß nach erfolgter Anschaltung eines Gerätes an die Schalteinrichtung mittels Anschaltebefehl und Übertragung des Startbefehls sowie Rückübertragung eines Startbefehl-Quittungssignales der Anschaltebefehl ein- oder mehrmals teilweise oder geringfügig verändert und jeweils erneut abgegeben wird, daß nach jedesmaliger Abgabe des veränderten Anschaltebefehls der Stopbefehl von der Schalteinrichtung an das betreffende Gerät, das auf den veränderten Anschaltebefehl jeweils reagiert hat, abgegeben wird, daß jedes der in dieser Weise reagierenden Geräte den Stopbefehl durch ein zurückübertragenes Stopbefehl-Quittungszeichen nur dann beantwortet, wenn es nach erfolgter Anschaltung vor einem Stopbefehl einen Startbefehl erhalten hat, und daß die Schalteinrichtung einen Ansteuerfehler daran erkennt, daß sie nach Abgabe des jeweils veränderten Anschaltebefehls und des jeweils daraufhin abgegebenen Stopbefehls ein Stopbefehl-Quittungssignal erhält.

Angesteuerte individuelle Geräte beantworten also alle erhaltenen Befehle mit jeweils einem befehlsindividuellen Quittungszeichen. Sie erhalten nach ihrer Ansteuerung jeweils immer zuerst einen Startbefehl und beantworten diesen dementsprechend mit einem Startbefehl-Quittungszeichen. Wird ein Stopbefehl von der zentralen Schalteinrichtung an ein jeweils regulär angesteuertes individuelles Gerät, das also nach seiner Ansteuerung einen Startbefehl erhalten hat, abgegeben, so beantwortet dasselbe den erhaltenen Stopbefehl durch ein Stopbefehl-Quittungszeichen. Erhält dagegen ein angesteuertes individuelles Gerät einen Stopbefehl, ohne vorher einen Startbefehl erhalten zu haben, so gibt es kein Stopbefehl-Quittungszeichen. Wie angegeben, wird nun nach erfolgter Ansteuerung eines individuellen Gerätes an die Schalteinrichtung mittels Anschaltebefehl und nach der regelmäßig erfolgenden Übertragung des Startbefehls sowie Rückübertragung eines Startbefehl-Quittungssignales der Anschaltebefehl ein-oder mehrmals teilweise oder geringfügig verändert. Hierbei handelt es sich um Veränderungen, die bei als Anschaltebefehle verwendeten codierten Ansteueradressen in Einfachfehlern bestehen, bei diesen codierten Adressen also um einen jeweils nur eine einzige Ziffernstelle betreffenden Fehler. Bei einer dekadisch cdierten Adresse gibt es für jede Ziffernstelle neun Fehlermöglichkeiten. Bei einer binärcodierten Adresse gibt es für jede Ziffernstelle nur eine einzige Fehlermöglichkeit. Im Sinne dieser Fehlermöglichkeiten ist also die obige Angabe zu verstehen, das der Anschaltbefehl mehrmals teilweise verändert wird. Diese teilweise Veränderung kann auch als geringfügig zu betrachten sein. Eine geringfügige Veränderung eines Anschaltbefehls kann bei einer Ansteuerung über gerätindividuelle Ansteuerstromkreise auch darin bestehen, daß anstelle des richtigen Ansteuerstromkreises nur ein räumlich benachbarter Ansteuerstromkreis markiert wird. Liegen z. B. sämtliche Ansteuerstromkreise in einem Bandkabel einzeln nebeneinander, so kann eine geringfügige Änderung darin bestehen, daß anstelle eines ursprünglich zu markierenden Ansteuerstromkreises einer der beiden unmittelbar benachbarten Ansteuerstromkreise markiert wird. Dies Ganze kann ebensogut auch vorkommen bei einer zweikoordinatenmäßigen Ansteuerung entsprechend der bereits genannten Deutschen Patentschrift DE-C-1 562 230. - Wird nun aufgrund eines Einfachfehlers ein individuelles Gerät falsch angesteuert, sei es bei einer regulären und ursprünglichen Ansteuerung eines Gerätes durch die Schalteinrichtung oder bei einer Ansteuerung mittels teilweise oder geringfügig verändertem Anschaltebefehl, so wird dann, wenn bei einer wiederholten Ansteuerung jeweils dasselbe individuelle Gerät erreicht wird wie bei der regulären ursprünglichen Ansteuerung, nach dem Stopbefehl ein Stopbefehl-Quittungssignal erhalten, woraus zu erkennen ist, daß mit Hilfe von zwei verschiedenen Ansteuerbefehlen ein und dasselbe individuelle Gerät erreicht wurde.

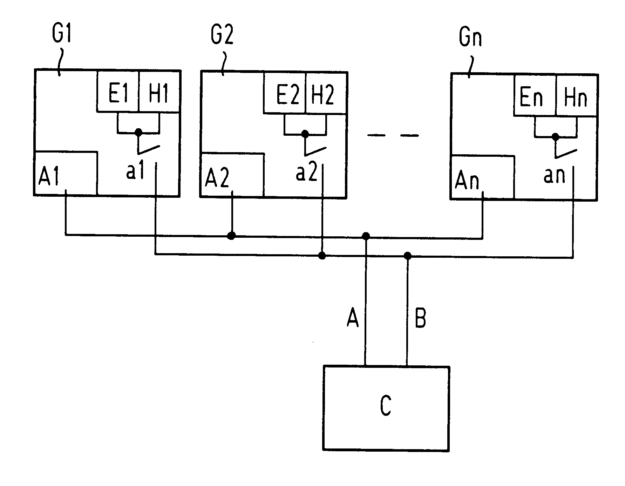

In der Zeichnung ist ein Ausführungsbeispiel der Erfindung nur in wesentlich zu ihrem Verständnis beitragenden Bestandteilen dargestellt, worauf dieselbe jedoch keineswegs beschränkt ist.

Es ist eine Anzahl von individuellen Geräten G1 bis Gn vorgesehen, die von einer zentralen Schalteinrichtung C her ansteuerbar sind. Eine Ansteuerung erfolgt mit Hilfe von von der Schalteinrichtung C zu den Geräten über eine Adressleitung A übertragbaren gerätindividuellen Anschaltebefehlen. Es gibt also gerätindividuelle verschiedene Anschaltebefehle, wobei jeweils ein bestimmter Anschaltebefehl zur Ansteuerung jeweils eines bestimmten Gerätes dient.

Bei dieser Adressleitung A kann es sich um eine ein- oder mehradrige Leitung handeln. Die Anschaltebefehle können in codierter Form übertragbare Ansteueradressen sein. Die einzelnen Codeelemente einer codierten Ansteueradresse können gleichzeitig parallel über mehrere Leitungsadern übertragen werden oder auch in einem Zeitraster nacheinander über ein und denselben Übertragungsweg innerhalb dieser Adressleitung A.

Es ist auch möglich, daß die Adressleitung vieladrig realisiert ist und daß eine Ansteuerung der individuellen Geräte in der Weise erfolgt, wie es in der bereits weiter oben genannten Deutschen Patentschrift DE-C-1 562 230 beschrieben ist, also in einem Zweikoordinatensystem. Darüber hinaus besteht auch die Möglichkeit, für jedes des individuellen Geräte G1 bis Gn jeweils eine eigene, also gerätindividuelle Ansteuerader vorzusehen. In diesem Falle ist es zweckmäßig die Ansteueradern in einer solchen Ansteuerleitung in einem Bandkabel anzuordnen, in dem die einzelnen Ansteueradern alle einzeln nebeneinander angeordnet sind. - Bei der weiteren Beschreibung dieses Ausführungsbeispiels sei jedoch davon ausgegangen, daß die Ansteuerbefehle in codierter Form von der Schalteinrichtung C zu den Geräten G1 bis Gn übertragen werden, und zwar bitseriell, d.h. die einzelnen Codeelemente jeder der Ansteueradressen zeitlich einzeln nacheinander.

In den individuellen Geräten G1 bis Gn sind Adressempfänger A1 bis An vorgesehen. Diese Adressempfänger sind in an sich bekannter Weise so aufgebaut, daß sie nur auf jeweils eine einzige ganz bestimmte, und zwar gerätindividuelle Ansteueradresse reagieren. Gibt also die zentrale Schalteinrichtung C einen Anschaltebefehl in Form einer codierten Ansteueradresse über die Adressleitung A ab, so gelangt dieser Anschaltebefehl zu sämtlichen Adressempfängern A1 bis An. Nur derjenige Adressempfänger reagiert auf die über die Adressleitung A ausgesendete Adresse, der zu dem jeweils gerade anzusteuernden individuellen Gerät gehört.

Empfängt ein Adressempfänger die ihm entsprechende Adresse, so reagiert er hierauf dadurch, daß er einen gerätindividuellen Anschaltekontakt, z. B. al von seiner dargestellten Ruhelage in die Arbeitslage überführt. Es kann vorgesehen sein, daß die Anschaltekontakte so lange, und zwar nur so lange geschlossen sind jeweils, wie die betreffende Ansteueradresse über die Adressleitung A ausgesendet wird. Es ist aber auch möglich, die Adressempfänger und die die Anschaltekontakte tragenden Anscahlterelais so auszugestalten, daß zusätzlich zu einem Anschaltebefehl ein Signal über die Adressleitung übertragen wird, welches bewirkt, daß der betreffende Anschaltekontakt geschlossen wird, und daß der betreffende Anschaltekontakt wieder dadurch geöffnet werden kann, daß in Verbindung mit dem betreffenden Anschaltebefehl ein Zusatzsignal übertragen wird, das ein Öffnen des jeweiligen Anschaltekontaktes bewirkt.

In der zuvor beschriebenen Weise können nun also die verschiedenen Geräte G1 bis Gn einzeln angesteuert werden, und es kann bewirkt werden, daß jeweils in einem enzelnen individuellen Gerät der betreffende Anschaltekontakt geschlossen bzw. wieder geöffnet wird. Diese Anschaltekontakte können natürlich auch mehrfach parallel pro individuelles Gerät vorgesehen sein. Die Anschaltekontakte dienen zur Verbindung von gerätindividuellen Empfängern, z. B. E1, und Sendern, z. B. H1, an eine den Geräten gemeinsame zentrale Informationsleitung B. Diese Informationsleitung kann mehradrig sein. Dementsprechend wären dann auch die Anschaltekontakte pro individuelles Gerät ebenso mehrparallel vorzusehen, wie bereits erwähnt wurde. Über die zentrale Informationsleitung B werden in an sich bekannter Weise Informationen übertragen. Diese Informationen können codierte Informationen sein, z. B. dekadisch codierte Informationen oder binärcodierte Informationen. Es können Informationen von der zentralen Schalteinrichtung C zu den individuellen Geräten übertragen werden, wo sie mit Hilfe der Empfänger E1 bis En empfangen werden; ebensogut können auch Informationen von den individuellen Geräten an die zentrale Schalteinrichtung übertragen werden. Hierzu dienen gerätindividuelle Sender H1 bis Hn.

Nach jeweiliger Ansteuerung und Anschaltung des betreffenden Gerätes an die Schalteinrichtung über die Informationsleitung B werden zwischen der Schalteinrichtung und dem jeweiligen Gerät Informationen zur Überprüfung der richtigen Anschaltebefehls-Abgabe an das Gerät, sowie der darauf erfolgten Anschaltung des richtigen Gerätes ausgetauscht. Von der Schalteinrichtung an jeweils ein angeschaltetes Gerät übertragene verschiedene Befehle werden befehls-individuell durch zurückübertragene Quittungszeichen überprüft. Nach erfolgter Anschaltung überträgt die Schalteinrichtung zunächst einen Startbefehl an das betreffende Gerät. Jedes der Geräte beantwortet einen erhaltenen Befehl mit einem entsprechenden Quittungszeichen. Erhält also ein angesteuertes und angeschaltetes Gerät nach Aufnahme des Anschaltebefehls einen Startbefehl, so gibt es selbsttätig anschließend ein Startbefehl-Quittungszeichenab. Dies erfolgt mit Hilfe des gerätindividuellen Senders, z. B. H1.

Nach erfolgter Ansteuerung und Anschaltung eines individuellen Gerätes werden also zuerst Startbefehl und Startbefehl-Quittungszeichen in der angegebenen Weise ausgetauscht. Sodann können weitere Befehle und entsprechende Quittungszeichen ausgetauscht werden. Ein Befehls-Quittungszeichen-Austausch wird immer dadurch beendet, daß zuletzt ein Stop-Befehl von der Schalteinrichtung zu dem betreffenden Gerät übertragen wird, welchen dasselbe mit einem Stopbefehl-Quittungszeichen beantwortet.

Bei dem hier beschriebenen Ausführungsbeispiel ist von besonderer Bedeutung die Überwachung der richtigen Funktion der Adressempfänger A1 bis An einschließlich der Übertragung der Ansteueradressen über die Adressleitung A. Von besonderer Bedeutung dabei ist eine Überwachung der richtigen Ansteuerung und Anschaltung dahingehend, daß jeweils ein Adressempfänger nur auf eine einzige Ansteueradresse reagiert, also nicht (aufgrund eines Fehlers) zugleich auf zwei verschiedene Ansteueradressen, namentlich solche, die sich nur in einer Ziffernstelle voneinander unterscheiden.

Um nun zu überprüfen, daß jedes der verschiedenen individuellen Geräte jeweils nur auf eine einzige, und zwar auf die jeweils ihm individuell zugeordnete Ansteueradresse reagiert, ist vorgesehen, daß nach erfolgter Anschaltung eines Gerätes an die Schalteinrichtung mittels Anschaltebefehls, d. h. gerätindividueller Ansteueradresse und Übertragung des Startbefehls von der Schalteinrichtung an das betreffende Gerät sowie Rückübertragung eines Startbefehl-Quittungssignales von dem Gerät an die Schalteinrichtung der Anschaltebefehl, d. h. die binärcodierte Ansteueradresse, durch die Schalteinrichtung ein- oder mehrmals teilweise oder geringfügig verändert und jeweils erneut abgegeben wird. Unter der Voraussetzung, daß es sich bei den Anschaltebefehlen um binärcodierte Ansteueradressen handelt, möge eine teilweise Veränderung jeweils einer Ansteueradresse darin bestehen, daß jeweils nur ein Binärzeichen in das jeweils umgekehrte Binärzeichen verändert wird. Besteht also eine Ansteueradresse aus insgesamt acht Binärzeichen, so gibt es z. B. acht teilweise veränderte Ansteueradressen, von denen jede jeweils durch einen Ein-bit-Fehler bei der Adressenübertragung oder dem Adressenempfang oder der Adressenauswertung verursacht sein kann. Eine geringfügige Ansteueradressen-Veränderung kann darin bestehen, daß bei einer Adressierung über eine Ader eines Bandkabels oder über zwei Adern von zwei Bandkabeln (vgl. die zweikoordinatenmäßige Ansteuerung gem. der Anordnung, die in der bereits genannten Deutschen Patentschrift DE-C-1 562 230 beschrieben ist) infolge eines Aderschlusses zwischen räumlich benachbarten Bandkabeladern außer einer jeweils markierten Bandkabelader die betreffende Nachbarader fälschlich d.h. fehlerbedingt mitmarkiert ist.

Es ist nun weiterhin vorgesehen, daß nach jedesmaliger Abgabe einer in der angegebenen Weise veränderten Ansteueradresse der bereits beschriebene Stopbefehl von der Schalteinrichtung an das betreffende Gerät, das auf den jeweils veränderten Anschaltebefehl reagiert hat, abgegeben wird. Jedes der in dieser Weise auf die einzelnen veränderten Ansteueradressen reagierenden Geräte beantwortet den Stopbefehl durch ein zurückübertragenes Stopbefehl-Quittungszeichen nur dann, wenn es nach erfolgter Anschaltung vor einem Stopbefehl einen Startbefehl erhalten hat. Wird also durch eine im erfindungsgemäßen Sinn jeweils veränderte Ansteueradresse tatsächlich ein anderes individuelles Gerät als das durch die richtige Ansteueradresse ursprünglich angesteuerte individuelle Gerät angesteuert, so kann dieses andere Gerät den Stopbefehl nicht mit einem Stopbefehl-Quittungzeichen beantworten, weil es nach erfolgter Anschaltung zunächst keinen Startbefehl erhalten hatte. Um also zu überprüfen, ob die Ansteuerung und Anschaltung mit Hilfe eines bestimmten Anschaltebefehls, d.h. mit einer bestimmten Ansteueradresse richtig stattgefunden hat, d. h. ob auch kein anderes der individuellen Geräte fälschlich zusätzlich auf die ursprünglich richtig abgegebene Ansteueradress reagiert hat, gibt die Schalteinrichtung nacheinander Ansteueradressen ab, die alle durch jeweils einen künstlichen Ein-bit-Fehler erzeugt worden sind, die also durch lauter verschiedene solche Fehler künstlich verfälscht worden sind. Einen Ansteuerfehler erkennt die Schalteinrichtung daran, daß sie nach Abgabe eines in der beschriebenen Weise jeweils veränderten Anschaltebefehls und des jeweils daraufhin abgegebenen Stopbefehls ein Stopbefehl-Quittungszeichen erhält. Ein solches Stopbefehl-Quittungszeichen kann die Schalteinrichtung C nur unter dem Umständen von einem jeweils mittels veränderter Ansteueradresse angesteuerten Gerät erhalten, wenn dieses Gerät zuvor auch auf die unverändert abgegebene Ansteueradresse fälschlich reagiert hatte. In der beschriebenen Weise können also Adressierungsfehler, die die Aussendung, Übertragung, den Empfang und die Auswertung der Ansteueradressen betreffen, erkannt werden. Die Überprüfung kann auf veränderte Ansteueradressen im Sinne von Ein-bit-Fehlern beschränkt sein. Es ist aber auch möglich, die Überprüfung in entsprechender Weise sinngemäß auch auf Zwei-bit-Fehler auszuweiten.

## Patentansprüche

1. Verfahren zur Überwachung einer fehlerfreien Abwicklung von Ansteuer- und Anschaltevorgängen in einer Schaltungsanordnung für Fernmeldeanlagen insbesondere Fernsprechvermittlungsanlagen, in der individuelle Geräte (G1...Gn) von einer zentralen Schalteinrichtung (C) mit Hilfe von von letzterer zu den Geräten übertragenen Anschaltbefehlen angesteuert werden und in der nach jeweiliger Ansteuerung und Anschaltung des betreffenden Gerätes an die Schalteinrichtung zwischen diesen beiden Informationen zur Überprüfung der richtigen Anschaltebefehls-Abgabe an das Gerät sowie der darauf erfolgten Anschaltung des richtigen Geräts ausgetauscht werden und in der von der Schalteinrichtung an ein angeschlossenes Gerät übertragene verschiedene Befehle befehls-individuell durch zurückübertragene Quittierungszeichen überprüft werden und in der von der Schalteinrichtung an das betreffende Gerät nach erfolgter Anschaltung ein Startbefehl übertragen und vor oder nach erfolgter Anschaltung ein Stopbefehl übertragen wird, **dadurch gekennzeichnet,** daß nach erfolgter Anschaltung eines Gerätes an die Schalteinrichtung mittels Anschaltebefehl und Übertragung des Startbefehls sowie Rückübertragung eines Startbefehl-Quittungssignals der Anschaltebefehl ein- oder mehrmals teilweise oder geringfügig verändert und jeweils erneut abgegeben wird, daß nach jedesmaliger Abgabe des veränderten Anschaltebefehls der Stopbefehl von der Schalteinrichtung an das betreffende Gerät, das auf den veränderten Anschaltebefehl jeweils reagiert hat, abgegeben wird, daß jedes der in dieser Weise reagierenden Geräte den Stopbefehl durch ein zurückübertragenes Stopbefehl Quittungszeichen nur dann beantwortet, wenn es nach erfolgter Anschaltung vor einem Stopbefehl einen Startbefehl erhalten hat, und daß die Schalteinrichtung einen Ansteuerfehler daran erkennt, daß sie nach Abgabe des jeweils veränderten Anschaltebefehls und des jeweiligen daraufhin abgegebenen Stopbefehls ein Stopbefehl-Quittungssignalerhält.

## Claims

1. Method for monitoring an error-free performance of activation and connection operations in a circuit arrangement for telecommunication systems, preferably telephone exchanges, in which individual devices (G1...Gn) are activated by a central switching device (C) with the aid of connect commands transmitted from the latter to the devices, and in which, after activation and connection of the respective device to the switching device in each case, information is exchanged between these two devices for verifying the correct connect command output to the device and also the consequent connection of the correct device, and in which various commands transmitted by the switching device to a connected device are verified command-specifically by acknowledgement signals transmitted back, and in which, after connection has been accomplished, a start command is transmitted by the switching device to the respective device and a stop command is transmitted before or after connection has been accomplished, characterised in that, after connection of a device to the switching device has been accomplished by means of connect command and transmission of the start command as well as transmission back of a start command acknowledgement signal, the connect command is partially or slightly changed one or more times and output again in each case, in that, after each output of the changed connect command, the stop command is output by the switching device to the respective device that reacted to the changed connect command in each case, in that each of the devices reacting in this way responds to the stop command with a stop command acknowledgement signal transmitted back only if it received, after connection has been accomplished, a start command before a stop command, and in that the switching device recognises an activation error in that it receives a stop command acknowledgement signal after output of the respectively changed connect command and the respective stop command output thereupon.

**Revendications**

1. Procédé pour contrôler le déroulement sans erreurs de processus de commande et de commutation dans un montage pour des installations de télécommunications, notamment des installations de commutation téléphonique, dans lesquelles des appareils individuels (G1...Gn) sont commandés par un dispositif central de commutation (C) à l'aide d'instructions de raccordement transmises par ce dernier aux appareils et dans lesquelles, en fonction de la commande et du raccordement de l'appareil considéré au dispositif de commutation, des informations pour le contrôle de la délivrance correcte d'instructions de raccordement à l'appareil ainsi que du raccordement, effectué ensuite, de l'appareil correct, sont échangées entre ces deux unités, et dans laquelle diverses instructions transmises par le dispositif de commutation à un appareil raccordé sont contrôlées individuellement au moyen de signaux d'accusé de réception transmis en retour, et dans laquelle une instruction de démarrage est transmise par le dispositif de commutation à l'appareil considéré, une fois réalisé le raccordement et une instruction d'arrêt est transmise avant ou après l'exécution du raccordement, caractérisé par le fait qu'une fois réalisé le raccordement d'un appareil au dispositif de commutation au moyen d'une instruction de raccordement et de la transmission de l'instruction de démarrage ainsi qu'au moyen de la transmission en retour d'un signal d'accusé de réception d'une instruction de démarrage, l'instruction de raccordement est modifiée à une ou plusieurs reprises partiellement ou légèrement et est à nouveau délivrée, qu'après chaque délivrance de l'instruction modifiée de raccordement, l'instruction d'arrêt est délivrée par le dispositif de commutation à l'appareil considéré, qui a réagi à l'instruction de raccordement modifiée, que chacun des appareils, qui réagissent de cette manière, répond à l'instruction d'arrêt au moyen d'un accusé de réception de l'instruction d'arrêt, transmis en retour, uniquement lorsqu'il a reçu une instruction de démarrage avant une instruction d'arrêt, une fois réalisé le raccordement, et

que le dispositif de commutation identifie une erreur de commande au fait qu'après la délivrance de l'instruction de raccordement, respectivement modifiée, et de l'instruction d'arrêt respective alors délivrée, ce dispositif reçoit un signal d'accusé de réception de l'instruction d'arrêt.